**Europäisches Patentamt**

**European Patent Office**

**Office européen des brevets**

(11) Veröffentlichungsnummer: **0 458 266 A1**

# (12) EUROPÄISCHE PATENTANMELDUNG

(21) Anmeldenummer: **91108189.1**

(22) Anmeldetag: **21.05.91**

(51) Int. Cl.⁵: **F16D 25/14**, F16D 25/11, F16D 25/08

(30) Priorität: **22.05.90 HU 312790**

(43) Veröffentlichungstag der Anmeldung:
**27.11.91 Patentblatt 91/48**

(84) Benannte Vertragsstaaten:
**AT DE FR GB**

(71) Anmelder: **Csepel Autogyár**
**Pf. 38**
**H-2311 Szigetszentmiklos(HU)**

(72) Erfinder: **Töröcsik, Lászl , Dipl.-Ing.**
**Kakukk u. 10/b**
**H-1126 Budapest(HU)**

Erfinder: **Simonyi, Sándor, Dr. Dipl.-Ing.**
**Baglyasalja, Petöfi u. 59**
**H-3102 Salg tarján(HU)**
Erfinder: **Szivák, Gyula, Dipl.-Ing.**
**Batthyány u. 19**
**H-6200 Kiskörös(HU)**
Erfinder: **Vál czi, György, Dipl.-Ing.**
**Budapesti t. 40**
**H-3104 Salg tarján(HU)**

(74) Vertreter: **Patentanwälte Viering & Jentschura**
**Steinsdorfstrasse 6 Postfach 22 14 43**
**W-8000 München 22(DE)**

(54) **Pneumatische Betätigungsvorrichtung insbesondere einer Reibkupplung für einen Verbrennungsmotor.**

(57) Pneumatische Betätigungsvorrichtung insbesondere einer Reibkupplung für einen Verbrennungsmotor, hat einen pneumatischen Arbeitszylinder (1), mit einem Kolben (3) mit an der dem Arbeitsraum (2) abgewandten Seite eine Schubstange (5). An dem pneumatischen Arbeitszylinder (1) ist ein Steuerzylinder (6) angeordnet. In dem Steuerzylinder (6) ist ein Steuerkolben (8), der den Raum des Steuerzylinders (6) in einen Steuerraum (45) und einen Ausgleichsraum (38) unterteilt, die mit einander in Verbindung stehen. In dem Steuerkolben (8) ist eine Kammer (11), die einerseits über eine durch die Stirnwand des Steuerkolbens (8) hindurchführende Bohrung (12) mit dem Steuerraum (45), andererseits über eine durch die Seitenwand des Steuerkolbens (8) hindurchführende Öffnung (42) mit einer die Druckluft einführenden Einlaßöffnung (40) des Steuerkolbens (6) verbunden ist, rings der durch die Stirnwand des Steuerkolbens (8) hindurchführenden Bohrung (12) von der Kammer (11) her ein Ventilsitz (13) ausgebildet ist, der Ventilsitz (13) von einem mit einer Füllventilfeder (14) belasteten Verschlußelement (15) abgeschlossen wird. Der Steuerkolben (8) mit dem Kolben (3) in Betätigungsverbindung steht. In der dem Steuerkolben (8) gegenüberliegenden Endwand (16) des Steuerraumes (45) eine Bohrung (17), worin ein sich abgedichtet bewegendes Abblasrohr (18) angeordnet sind, mit in den Steuerraum (45) erstreckenden Ende ein Ventilsitz (20), vor dem das Verschlußelement (21) des Entlüftungsventils angeordnet ist. Die Verschlußelementen (15, 21) stehen miteinander in Betätigungsverbindung. Der Innenraum (51) des Abblasrohres (18) ist mit der Umgebung verbunden. Das Abblasrohr (18) ist in einer zu dem Verschlußelement (21) des Entlüftungsventils entgegengesetzten Richtung von einer Feder (23) belastet und steht mit einem Elektromagneten (24) in Betätigungsverbindung.

EP 0 458 266 A1

Fig. 1

Die Erfindung betrifft eine solche Betätigungsvorrichtung, die vorzugsweise zur Betätigung einer zur Drehmomentübertragung von Verbrennungsmotoren dienenden Reibkupplung verwendet werden kann, wobei die Vorrichtung einen einen Arbeitsraum aufweisenden pneumatischen Arbeitszylinder, einen in diesem sich dicht bewegenden Kolben und eine an dem Kolben an der dem Arbeitsraum entgegengesetzten Seite abgestützte Schubstange aufweist, weiterhin der Arbeitsraum über ein Entleerungsventil mit der Umgebung, über ein Füllventil mit der Druckluftquelle verbunden ist. Das Bemühen der Konstrukteure, die mit der Betätigung der Kupplung verbundene Arbeit des Fahrers zu erleichtern, ist seit langem bekannt. Gleichzeitig wurden solche Fahrzeugkonstruktionen entwickelt, bei denen wegen der Anordnung des Motors - bei Fahrzeugen mit Heckmotor - die Betätigungsarbeit von dem Kupplungpedal wenigstens zum Teil hydraulisch oder pneumatisch übertragen wird.

Als erster Schritt wurden Servosysteme entwickelt. Bezüglich der vorliegenden Erfindung haben die Servosysteme mit Druckluft eine Bedeutung; dementsprechend wird hier nur bemerkt, daß andere Servosysteme, wie z.B. elektrohydraulische Systeme oder Systeme mit Unterdruck, ebenfalls entwickelt wurden.

Das Wesen der Servosysteme ist es, wie bekannt, daß diese parallel zu der Kraftübertragung zwischen den betätigenden und betätigten Baueinheiten, d.h. zwischen dem Kupplungpedal und dem Kupplung-Ausrückhebel, unter Verwendung einer Hilfsenergie eine Hilfskraft ausüben, die bedeutend größer als die übertragene Kraft ist und deren Richtung derjenigen der übertragenen Kraft entspricht. Im allgemeinen ist es kennzeichnend für diese Systeme, daß die Kraftübertragung zwischen den betätigenden und betätigten Baueinheiten eine stets vorhandene Verbindung bedeutet, d.h. das System auch unabhängig von der Hilfskraft funktionsfähig ist. Dies ist erforderlich, weil so die augenblickliche Stellung der betätigenden Einheit die augenblickliche Stellung der betätigten Einheit darstellt.

Die Hilfskraft kann mithilfe der betätigenden Baueinheit, wie es z.B. aus der HU-Patentschrift 168.945 entnehmbar ist, oder mithilfe der betätigten Baueinheit, wie es in der HU-179.418 dargestellt ist, zustandegebracht werden.

Die HU-168.945 beschreibt ein mit einem pneumatischen Servosystem ergänztes Kupplungpedal. Die dauernde Verbindung zwischen dem Kupplungpedal und dem Kupplung-Ausrückhebel wird durch den an das Kupplungpedal angebauten hydraulischen Geberzylinder, den mit dem Ausrückhebel verbundenen hydraulischen Arbeitszylinder und die die beiden verbindende geschlossene Rohrleitung sichergestellt. Die Hilfskraft wird von dem sich an dem Kolben des hydraulischen Geberzylinders abstützenden weiteren Kolben ausgeübt, der sich in einem pneumatischen Arbeitszylinder bewegt. Das Füllen bzw. Entleeren des pneumatischen Arbeitszylinders mit Druckluft werden von zwei Ventilen durchgeführt, die letzten Endes von dem Kupplungpedal betätigt werden.

Bei dem aus der HU-179.418 ersichtlichen, mit einem pneumatischen Servosystem ergänzten hydraulischen Arbeitszylinder wird die dauernde Verbindung ebenfalls durch den von dem Kupplungpedal betätigten hydraulischen Geberkolben, die geschlossene Rohrleitung und den hydraulischen Arbeitszylinder gebildet. Aber nach dieser Ausführungsform ist der Kolben des hydraulischen Arbeitszylinders mit dem Kolben des pneumatischen Arbeitszylinders verbunden, und das Füllen und Entleeren des pneumatischen Arbeitszylinders mit Druckluft werden von zwei solchen miteinander zusammenwirkenden Ventilen durchgeführt, die in dem Gehäuse des hydraulischen Arbeitszylinders angeordnet sind und die von derjenigen hydraulischen Flüssigkeit betätigt werden, die von dem hydraulischen Geberzylinder kommt und den hydraulischen Arbeitszylinder ebenfalls betätigt.

Bei diesen Systemen muß der Fahrer noch eine ziemlich große Pedalkraft ausüben, was dem Fahrer z.B. bei den im Stadtverkehr eingesetzten öffentlichen Autobussen immerhin noch eine große Mühe verursacht. Aus diesem Grund wurden verschiedene halbautomatische und automatische Kupplungsysteme entwickelt. Das Wesen dieser Systeme ist, daß der Fahrer per Hand oder durch das Verschieben des Schalthebels einen elektrischen Schalter in Betrieb setzt, der das Lösen der Kupplung startet, und die Kupplung sich nach der Beendigung des Gangwechsels, dem Ausschalten des elektrischen Schalters und mit dem gleichzeitigen Niederdrücken des Gaspedals mit einer Geschwindigkeit schließt, die zu der Zunahme der Motordrehzahl proportional ist.

Derartige Ausführungsformen sind aus der DE-A-26 37 635, der DE-A-26 37 636, der US-A-4 401 200 und der US-A-4 403 682 ersichtlich. Bei allen Ausführungsformen ist ein Betätigungszylinder vorhanden, dessen Kolbenstange mit dem Kupplungs-Ausrückhebel verbunden ist, und das Zu- bzw. Abführen des Betätigungsmediums wird von jeweils einem mit einem Elektromagneten betätigten Ventil geregelt. Die Erregung der Elektromagnete wird aufgrund der Motordrehzahl und ggf. der Eingangsdrehzahl des Wechselgetriebes von einer Steuereinheit entsprechend eines mehr oder weniger komplizierten Programms gesteuert.

Zwar sind diese Programme immer perfekter, jedoch können diese einige, von dem Fahrer sonst für richtig gehaltene Manöver (Schleifenlassen der Kupplung) nicht so genau durchführen, wie dies der Fahrer mit einem Pedal leicht durchführen könnte.

Aus dieser Übersicht ist entnehmbar, daß der Fahrer bei nicht automatisierten Systemen für das Lösen der Kupplung eine entsprechende Kraft ausüben muß, und er muß die Betätigungsverbindung zwischen dem Kupplungpedal und der Kupplung durch Rohrleitungen aufrechterhalten; falls aber die Betätigungskraft und die Betätigungsverbindung durch die Automatisierung entfallen, hat die Betätigung ein niedrigeres Niveau.

Das Ziel der Erfindung ist es, eine solche pneumatische Betätigungsvorrichtung zu schaffen, die die bei den Servosystemen erforderliche direkte Verbindung entbehrlich macht, jedoch der Absicht des Fahrers genau folgt. Zu der Erfindung hat diejenige Erkenntnis geführt, daß die Ventile bei entsprechender Ausbildung unter Verwendung von passenden Elektromagneten elektrisch ebenso geregelt werden können wie mit Hilfe einer mechanischen oder hydraulischen Verbindung.

Die Erfindung betrifft also eine pneumatische Betätigungsvorrichtung zur Betätigung einer zur Drehmomentübertragung eines Verbrennungsmotors dienenden Reibkupplung, wobei die Vorrichtung einen pneumatischen Arbeitszylinder, in diesem einen Arbeitsraum und einen in dem Arbeitsraum sich dicht bewegenden Kolben aufweist, der Kolben ggf. als Membran ausgebildet ist und an dem Kolben an der dem Arbeitsraum abgewandten Seite eine Schubstange abgestützt ist, weiterhin der Arbeitsraum über ein Entlüftungsventil mit der Umgebung, und über ein Füllventil mit einer Druckluftquelle verbunden ist und die Vorrichtung derart ausgebildet ist, daß an dem pneumatischen Arbeitszylinder ein Steuerzylinder angeordnet ist, in dem Steuerzylinder ein an seinen beiden Enden abgedichteter Steuerkolben vorhanden ist, der Steuerkolben den Raum des Steuerzylinders in einen Steuerraum und einen Ausgleichsraum unterteilt, der Steuerraum und der Ausgleichsraum mit dem Arbeitsraum in Verbindung stehen, in dem Steuerkolben eine Kammer ausgebildet ist, die einerseits über eine durch die Stirnwand des Steuerkolbens hindurchführende Bohrung mit dem Steuerraum, andererseits über eine durch die Seitenwand des Steuerkolbens hindurchführende Öffnung mit einer die Druckluft einführenden Einlaßöffnung des Steuerkolbens verbunden ist, rings der durch die Stirnwand des Steuerkolbens hindurchführenden Bohrung von der Kammer her ein Ventilsitz ausgebildet ist, der Ventilsitz von einem mit einer Füllventilfeder belasteten Verschlußelement abgeschlossen wird, der Steuerkolben mit dem Kolben des pneumatischen Arbeitszylinders in Betätigungsverbindung steht, in der dem Steuerkolben gegenüberliegenden Endwand des Steuerraumes eine Bohrung, und in dieser ein sich abgedichtet bewegendes Abblasrohr angeordnet sind, an dem sich in den Steuerraum erstreckenden Ende des Abblasrohres ein Ventilsitz ausgebildet ist, vor dem das Verschlußelement des Entlüftungsventils angeordnet ist, das Verschlußelement des Entlüftungsventils und das des Füllventils miteinander in Betätigungsverbindung stehen, der Innenraum des Abblasrohres mit der Umgebung verbunden ist, das Abblasrohr in einer zu dem Verschlußelement des Entlüftungsventils entgegengesetzten Richtung von einer Feder belastet ist und mit einem Elektromagneten in Betätigungsverbindung steht, schließlich der Elektromagnet mit einer durch menschliche Kraft und/oder automatisch gesteuerten elektrischen Regelungsbaueinheit verbunden ist.

Bei einer bevorzugten Ausführungsform der erfindungsgemäßen Vorrichtung sind das Verschlußelement des Füllventils und das Verschlußelement des Entlüftungsventils als ein einziger Verschlußkörper ausgebildet, und der in dem Steuerkolben ausgebildete Ventilsitz und der an dem Abblasrohr ausgebildete Ventilsitz bilden eine koaxiale Rotationsfläche, und der Außendurchmesser des Abblasrohres ist im Bereich des Ventilsitzes kleiner als der Durchmesser der in dem Steuerkolben angeordneten Bohrung.

Bei einer zweiten bevorzugten Ausführungsform der erfindungsgemäßen Vorrichtung sind der pneumatische Arbeitszylinder und der Steuerzylinder als eine einzige Baueinheit ausgebildet und der betätigende Arbeitsraum und der Ausgleichsraum bilden einen gemeinsamen Raum.

Bei einer dritten bevorzugten Ausführungsform der erfindungsgemäßen Vorrichtung sind der Kolben des pneumatischen Arbeitszylinders oder ein mit dem Kolben in Zwangsverbindung stehendes Bauteil und der Steuerkolben mit jeweils einem Drehpunkt eines Hebels verbunden, während der dritte Drehpunkt des Hebels an dem pneumatischen Arbeitszylinder befestigt ist.

Bei einer vierten bevorzugten Ausführungsform der erfindungsgemäßen Vorrichtung sind zwei Drehpunkte von den Drehpunkten des Hebels mit jewqeils einer Kulisse verbunden.

Bei einer fünften bevorzugten Ausführungsform der erfindungsgemäßen Vorrichtung ist der Kolben des pneumatischen Arbeitszylinders von dem Arbeitsraum her mit einer Kolbenstange versehen, wobei die Kolbenstange mit dem einen, und der Steuerkolben mit dem anderen Anschlußelement einer an sich bekannten Verschleißnachjustiereinheit in Betätigungsverbindung stehen.

Eine sechste bevorzugte Ausführungsform der erfindungsgemäßen Vorrichtung ist so ausgebildet, daß an der Kolbenstange des in dem pneumatischen Arbeitszylinder angeordneten Kolbens eine sich reibschlüssig anschließende Hülse vorhanden ist, die Hülse mit dem Steuerkolben in Betätigungsverbindung steht, an dem einen der von der Hülse und dem die Hülse umschließenden Teil des pneumatischen Arbeitszylinders gebildeten Bauteilen ein Anschlag, und an dem anderen dieser Bauteile entlang der Bewegungsbahn der Hülse beidseitig des Anschlags jeweils ein weiterer äußerer Anschlag angeordnet ist, der Abstand zwischen den beiden äußeren Anschlägen gleich der Summe der jeweils zugelassenen Hublänge des Kolbens und der Dicke des mittleren Anschlages ist, die Reibkraft des Reibschlusses zwischen der Kolbenstange und der Hülse größer ist als die aufgrund der den Steuerkolben mit der Hülse verbindenden Betätigungsverbindung auf die Hülse einwirkende axiale Kraft, aber kleiner ist als die von der in der Grundstellung befindlichen betätigten Baueinheit, ggf. von einer im geschlossenen Zustand befindlichen Kupplung in dem Kolben erzeugte axiale Kraft, und der freie Axialabstand zwischen der Hülse und dem Kolben wenigstens so groß ist wie die aus der zulässigen Abnutzung der Elemente der betätigten Baueinheit unter Berücksichtigung des zwischen der betätigten Baueinheit und dem Kolben vorhandenen Übersetzungsverhältnisses berechnete Hubdifferenz.

Bei einer siebten bevorzugten Ausführungsform der erfindungsgemäßen Vorrichtung ist der an den Kolben angeschlossene Drehpunkt des Hebels mit der Hülse verbunden.

Bei einer weiteren bevorzugten Ausführungsform der erfindungsgemäßen Vorrichtung steht der Kolben des pneumatischen Arbeitszylinders mit einem Signalgeberelement eines elektrischen Signalgebers in Zwangsverbindung, das andere Signalgeberelement ist an den pneumatischen Arbeitszylinder angeschlossen, und der elektrische Signalgeber ist mit einer Anzeigeeinheit und/oder mit einer automatisch gesteuerten elektrischen Regelungsbaueinheit verbunden.

Schließlich stellt eine bevorzugte Ausführungsform der erfindungsgemäßen Vorrichtung auch diejenige Ausführungsform dar, bei der hinter dem Kolben des pneumatischen Arbeitszylinders oder hinter dem mit diesem Kolben verbundenen Bauelement, ggf. der Kolbenstange, in einem von der Grundstellung gemessenen Abstand eine Anschlagfläche ausgebildet ist, wobei der Abstand der Hubdifferenz entspricht, die aus der zulässigen Abnutzung der Elemente der betätigten Baueinheit unter Berücksichtigung des zwischen der betätigten Baueinheit und dem Kolben vorhandenen Übersetzungsverhältnisses berechnet ist.

Die Erfindung wird anhand von zwei detaillierten Ausführungsformen mit Hilfe der Zeichnung näher erläutert. In der Zeichnung zeigt:

Figur 1 eine einfachere Vorrichtung, und

Figur 2 eine mit einem Abnutzungsnachjustierer versehene Vorrichtung.

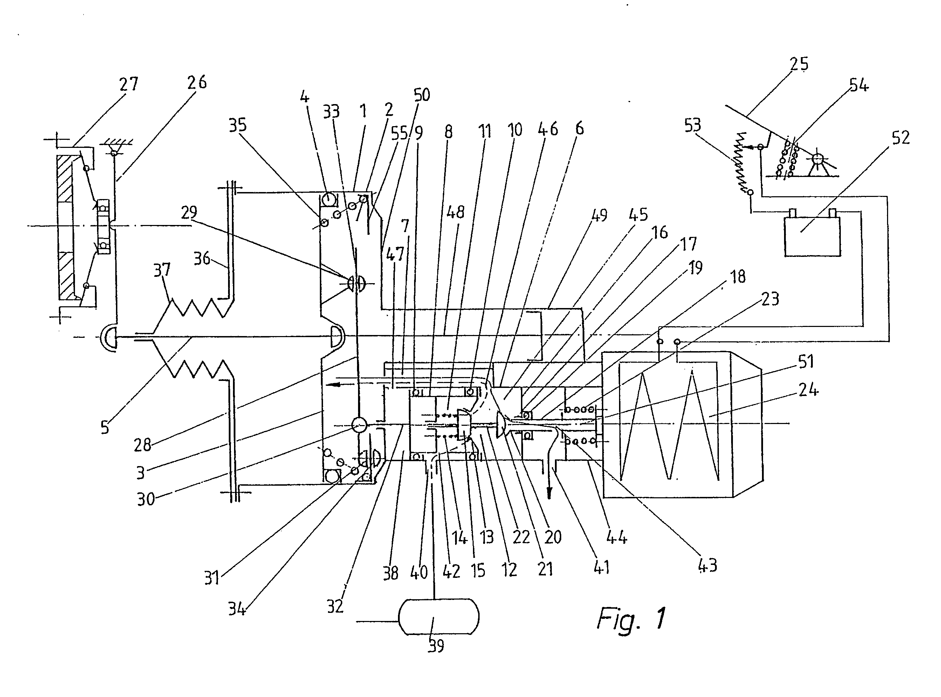

Die aus Figur 1 ersichtliche Vorrichtung stellt diejenige einfachste erfindungsgemäße Ausführungsform dar, bei der der Fahrer die Kupplung mit einem Pedal betätigt.

Die Ausbildung des pneumatischen Arbeitszylinders ist teilweise bekannt.

In dem pneumatischen Arbeitszylinder 1 ist ein Kolben 3 angeordnet, dessen Abdichtung von dem Dichtring 4 sichergestellt ist. An dem Kolben 3 ist eine Schubstange 5 mit einem Kugelgelenk abgestützt, und das andere Ende der Schubstange 5 ist mit dem Ausrückhebel 26 der Kupplung 27 ebenfalls über ein Kugelgelenk verbunden. Zwar ist es in Figur 1 nicht gezeigt, jedoch muß bei der Vorrichtung eine Nachjustierungsmöglichkeit der Reibelemente (Schwungrad, Reibscheibe, Druckplatte) der Kupplung 27 wegen deren Abnutzung sichergestellt werden. Dies kann im einfachsten Fall dadurch erreicht werden, daß an dem einen Ende der Schubstange 5 ein Gewinde vorhanden ist, an dem der Abstützkugelkörper einstellbar befestigt ist. Da diese Möglichkeit des Nachjustierens einen Teil der Erfindung nicht bildet, und die Fachleute zahlreiche solche Lösungen kennen, ist eine ausführlichere Erläuterung hier nicht erforderlich.

An der der Schubstange 5 entgegengesetzten Seite des Kolbens 3 weist dieser eine Kolbenstange 48 auf, die in einem sich aus dem Rückteil 50 des pneumatischen Arbeitszylinder 1 erstreckenden, mit einem geschlossenen Ende versehenen Führungszylinder 49 geführt ist. Der Kolben 48 hat hier lediglich die Aufgabe, ein Verkippen des Kolbens 3 aufgrund der wegen der Kugelgelenke nicht immer axial einwirkenden Kraft zu verhindern. Die Kolbenstange kann z.B. dann weggelassen werden, wenn der Kolben 3 mit einem breiten Schürzenteil versehen ist, oder wenn für die Schubstange 5 eine nur axiale Bewegung zugelassen ist.

Der Arbeitsraum 2 des pneumatischen Arbeitszylinders 1 ist an der der Schubstange 5 entgegengesetzten Seite des Kolbens 3 angeordnet. Der pneumatische Arbeitszylinder 1 ist von der Schubstange 5 her mit einem Deckel 35 und einem Gummifaltenbalg 37 abgeschlossen, dessen Aufgabe das Fernhalten von Staub ist.

Am Rückteil 50 des pneumatischen Arbeitszylinder 1 ist ein einen wesentlich kleineren Durchmesser aufweisender Steuerzylinder 6 angeordnet. In dem Steuerzylinder 6 ist ein Steuerkolben 8 angeordnet, der an seinen beiden Enden mit jeweils einem Dichtungsring 9 bzw. 10 versehen ist.

Der Steuerkolben 8 unterteilt den Innenraum des Steuerzylinders 6 in zwei Teile, nämlich in den Steuerraum 45 und in den Ausgleichsraum 38. Der Steuerraum 45 ist über eine Luftleitung 7 mit dem Arbeitsraum 2 verbunden. Die Luftleitung 7 ist mit einer Einlaßöffnung 46 an den Steuerraum 45 angeschlossen. Der Ausgleichsraum 38 ist mit dem Arbeitsraum 2 ebenfalls verbunden, in dem vorliegenden Fall derart, daß die Luftleitung 7 mit einer Einlaßöffnung 47 an den Ausgleichsraum 38 angeschlossen ist. Das Ziel dieser Ausbildung ist offenbar; in dieser Weise kann nämlich erreicht werden, daß an den beiden Seiten des Steuerkolbens 8 immer derselbe Druck vorhanden ist, und dadurch der Betrieb nicht von einer Druckdifferenz beeinflußt wird.

In dem Steuerkolben 8 ist eine Kammer 11 vorhanden, die über eine durch die Stirnwand des Steuerkolbens 8 hindurchführende Bohrung 12 mit dem Steuerraum 45 verbunden ist. Rings der Bohrung 12, von der Kammer 11, her ist ein Ventilsitz 13 ausgebildet. Der Ventilsitz 13 wird von einem Verschlußelement 15 abgeschlossen, das von einer Feder 14 im geschlossenen Zustand gehalten wird. Der Ventilsitz 13 und das Verschlußelement 15 bilden gemeinsam das Füllventil.

In der Seitenwand des Steuerkolbens 8 ist eine Öffnung 42 vorhanden, die sich in denjenigen Teil des Innenraumes des Steuerzylinders 6 öffnet, der von den an den jeweiligen Enden des Steuerkolbens 8 vorhandenen Dichtungsringen 9 und 10 eingeschlossen ist. Die in der Wand des Steuerzylinders 6 vorhandene Einlaßöffnung 40 ist an denselben Raum angeschlossen, die mit der Leitung der als Luftbehälter gezeigten Druckluftquelle 39 verbunden ist. Dementsprechend beeinflußt der zwischen den Dichtungsringen 9 und 10 stets vorhandene Druck den Betrieb des Steuerkolbens 8 ebenfalls nicht.

Der Steuerraum 45 ist von der Seite her, die der mit der Bohrung 12 versehenen Stirnfläche des Steuerkolbens 8 gegenüberliegt, mit einer Endwand 16 abgeschlossen. In der Endwand 16 ist eine Bohrung 17 angeordnet, durch die sich ein Abblasrohr 18 in den Steuerraum 45 erstreckt. Die Dichtigkeit zwischen der Bohrung 17 und dem Abblasrohr 18 ist mit einem Dichtungsring 19 sichergestellt.

An dem in dem Steuerraum 45 befindlichen Ende des Abblasrohres 18 ist ein Ventilsitz 20 ausgebildet. Dem Ventilsitz 20 gegenüber ist ein Verschlußelement 21 angeordnet. Das Verschlußelement 21 ist über den Schaft 22 mit dem Verschlußelement 15 verbunden. Zwischen dem Verschlußelement 21 und dem Ventilsitz 20, wobei diese beiden das Entlüftungsventil bilden, ist ein Spalt vorhanden.

An dem Abblasrohr 18, an dessen außerhalb der Endwand 16 liegenden Abschnitt, ist eine seitliche Bohrung 43 ausgebildet, die praktisch eine ständige Verbindung zwischen dem inneren Raum 51 des Abblasrohres 18 und der durch ein als Verlängerung des Steuerzylinders 6 ausgebildetes Rohr 44 hindurchführenden Abblasöffnung 41 bildet. Die Abblasöffnung 41 öffnet sich unmittelbar in die Umgebung.

Das dem Ventilsitz 20 gegenüberliegende Ende des Abblasrohres 18 ist an einen nicht dargestellten, sich bewegenden Eisenkern eines Elektromagneten 24 angeschlossen. Der Elektromagnet 24 ist an dem Ende des Rohres 44 befestigt. Das Abblasrohr 18 ist mit einer Feder 23 in Richtung zu dem Elektromagneten 24 hin belastet.

Der Elektromagnet 24 ist bezüglich seines elektrischen Charakters ein sog. Proportionaler Elektromagnet. Dies bedeutet, wie bekannt, daß der Bewegungsweg des Eisenkerns wegen dessen technischen Ausbildung einen solchen Abschnitt hat, in dem die von dem Elektromagneten ausgeübte Kraft nur von der Erregung abhängt und von der wegen einer Verstellung zustandekommenden Luftspaltänderung nicht beeinflußt wird.

Der Elektromagnet 24 ist an eine Speisequelle 52 angeschlossen, die im vorliegenden Fall ein Akkumulator ist. In einen Zweig der die Verbindung bildenden Leitung ist eine elektrische Regelungseinheit 53 eingefügt. Diese ist in Figur 1 eine Spannungsregelungsvorrichtung, deren sich bewegender Teil mit dem Kupplungpedal 25 verbunden ist. Diese Darstellungsweise der elektrischen Regelungseinheit 53 wurde nur wegen eines einfacheren Verständnisses verwendet. Die Spannungsregelungseinheit ist für die Regelung der Erregung die primitivste und unwirtschaftlichste Vorrichtung. In der Realität erfolgt die Erregung mit konstanter Spannung, aber unterschiedlich großen Impulsen. Dies ist präziser und wirtschaftlicher.

Das Kupplungpedal 25 wird von einer Feder 54 unterstützt. Die Feder 54 stellt, außer daß sie das Kupplungpedal 25 in dessen Grundstellung zurückführt, dem Fahrer das Gefühl des Betätigens der Kupplung sicher.

An dem dem Ausgleichsraum 38 benachbarten Ende des Steuerkolbens 8 ist eine Kolbenstange 32 angeordnet. Die Kolbenstange 32 erstreckt sich durch den Rückteil 50 hindurch in den Arbeitsraum 2. In dem Arbeitsraum 2 ist ein Hebel 28 angeordnet, der mit seinem mittleren Drehpunkt 30 mit der Kolbenstange 32 verbunden ist.

Der an dem jeweiligen Ende des Hebels 28 befindliche Drehpunkt 29 bzw. 31 ist an den Kolben 3 bzw. an den pneumatischen Arbeitszylinder 1 angeschlossen. Da der Abstand zwischen den Drehpunkten 29, 30, 31 sich mit der Bewegung des Kolbens 3 ändert, muß diese Änderung kompensiert werden. Figur 1 zeigt für das Kompensieren nur eine mögliche Ausführungsform, jedoch ist auch eine andere Anordnung denkbar.

Im vorliegenden Fall ist in dem Drehpunkt 29 auch eine Kulisse 33 ausgebildet, mit deren Hilfe der Drehpunkt 29 entlang dem Hebel 28 wandern kann. Der Drehpunkt 31 ist ebenfalls mit einer Kulisse 34 versehen, und zwar so, daß der Drehpunkt 31 an dem an dem Rückteil 50 befestigten Federteller 55 wandern kann. Dementsprechend kann der Drehpunkt 30 als eine sich nicht bewegende Verbindung zwischen dem Hebel 28 und der Kolbenstange 32 ausgebildet werden, wobei dies vorteilhaft ist, da eine Lösung mit Kulisse hier schwer zu verwirklichen wäre.

Der Federteller 55 kann an dem Rückteil 50 auch mit mechanischer Verbindung befestigt werden, jedoch ist die aus Figur 1 ersichtliche Lösung genügend. In dem Arbeitsraum 2 ist eine Feder 35 angeordnet, die sich einerseits auf den Kolben 3, andererseits auf den Federteller 55 abstützt. Auf diese Weise drückt die Feder 35 den Federteller 55 auf den Rückteil 50 auf, und gleichzeitig hält sie den Ausrückmechanismus der Kupplung 27 in einem spielfreien Zustand.

Die bisher beschriebene Vorrichtung arbeitet wie folgt.

Die Grundstellung der Kupplungen der Kraftfahrzeugen ist der geschlossene Zustand. Figur 1 zeigt die Kupplung in geschlossenem Zustand und die pneumatische Betätigungsvorrichtung in dem diesem Zustand entsprechenden Grundzustand.

Der Grundzustand bedeutet, daß der Kolben 3 sich in der Nähe der Rückseite 50 des pneumatischen Arbeitszylinders 1 befindet (soweit wie das vollständige Schließen der Kupplung 27 diese Stellung erzeugt) und zwischen dem an dem Ende des Abblasrohres 18 befindlichen Ventilsitz 20 und dem Entlüftungsventil 21 ein Spalt vorhanden ist, wodurch der Arbeitsraum 2 über die Luftleitung 7, den Steuerraum 45, das Entlüftungsventil, den inneren Raum 51 des Abblasrohres 18, die Bohrung 43 und die Abblasöffnung 41 mit der Umgebung verbunden ist.

In dem Grundzustand befindet sich das Kupplungpedal 25 ebenfalls in seiner Grundstellung, d.h. es ist nicht niedergedrückt. Die elektrische Regelungseinheit 53 gibt keine Erregungsspannung an die Spule des Elektromagneten 24, so daß dieser sich im nichterregten Zustand befindet.

Falls das Lösen der Kupplung 27 erforderlich ist, gibt die elektrische Regelungseinheit 53 mit dem Niederdrücken des Kupplungpedals 25 eine Erregungsspannung an den Elektromagneten 24. Der Elektromagnet 24 übt eine zu der Erregung proportionale Kraft auf den Eisenkern aus, der dementsprechend verschoben wird.

Der Eisenkern des aus Figur 1 ersichtlichen Elektromagneten 24 ist derart angeordnet, daß er infolge der magnetischen Feldstärke von links nach rechts, d.h. in Richtung zu dem Verschlußelement 21 verschoben wird. Zusammen mit dem Eisenkern wird das Abblasrohr 18 ebenfalls verschoben.

Wenn der an dem Ende des Abblasrohres 18 befindliche Ventilsitz 20 das Verschlußelement 21 erreicht, schließt das Entlüftungsventil und die Verbindung zwischen dem Arbeitsraum 2 und der Umgebung wird unterbrochen.

Hiernach bewegt sich das Abblasrohr 18 zusammen mit dem sich auf den Ventilsitz 20 aufstützenden Verschlußelement 21 weiter. Das Verschlußelement 21 hebt das mit ihm über den Schaft 22 verbundene Verschlußelement 15 von dem Ventilsitz 13 ab und dadurch wird das Entlüftungsventil geöffnet.

Aus der Druckluftquelle 39 wird Druckluft durch die Einlaßöffnung 40, die Öffnung 42, die Kammer 11, das offene Füllventil, die Bohrung 12, den Steuerraum 45 und die Luftleitung 7 in den Arbeitsraum 2 gelassen. Die Druckluft verschiebt den Kolben 3, der über die Schubstange 5 und den Ausrückhebel 26 mit dem Lösen der Kupplung 27 beginnt.

Wird der Kolben 3 verschoben, so verschiebt sich zusammen mit diesem auch der Drehpunkt 29 des Hebels 28. Der Hebel 28 verschiebt auch den an seinen Drehpunkt 30 angeschlossenen, an dem Ende der Kolbenstange 32 befindlichen Steuerkolben 8 in einem im Vergleich zu dem Verschieben des Kolbens 3 mit dem Hebelverhältnis verringerten Ausmaß.

Da der Ventilsitz 13 in dem Steuerkolben 8 ausgebildet ist, falls der Steuerkolben 8 sich schneller als das Abblasrohr 18 bewegt, drückt die Feder 14 das Verschlußelement 15 auf den Ventilsitz 13. Das Ventil wird geschlossen, die Strömung der Druckluft wird unterbrochen und der Kolben wird gestoppt.

Es ist ersichtlich, daß für die kontinuierliche Bewegung des Kolbens 3 die kontinuierliche Bewegung des Abblasrohres sichergestellt werden muß. Dies ist derart möglich, daß mit dem Niederdrücken des Kupplungspedals die Erregung des Elektromagneten 24 von der elektrischen Regelungseinheit 53 allmählich erhöht wird, und die auf den Eisenkern einwirkende Kraft von dem Elektromagneten 24, da er ein proportionaler Elektromagnet ist, linear erhöht wird. Während des Betriebes überwindet der Elektromagnet 24 die Federkraft der Feder 23, deren Federcharakteristik ebenfalls linear ist. Dieser Federkraft überlagert sich nach dem Öffnen des Füllventils die Federkraft der das Verschlußelement 15 belastenden Feder 14, jedoch kann danach die letztere Federkraft als Konstante betrachtet werden, und so beeinflußt diese Federkraft den Charakter des Betriebs nicht.

Von dem oben Gesagten ist es offensichtlich, daß das Abblasrohr 18 gegen die Feder 23 in einem solchen Maße verschoben wird, wie die elektrische Regelungseinheit 53 mit der Bewegung des Kupplungpedals 25 die Erregung des Elektromagneten 24 ändert. Dementsprechend entspricht die Position des Abblasrohres 18 immer der jeweiligen Stellung des Kupplungpedals 25.

Es braucht nicht extra betont zu werden, daß das oben Gesagte nur für diejenigen Abschnitt des Arbeitsbereichs des Elektromagneten 24 proportionalen Charakters gültig ist, der als linear betrachtet werden kann. Dementsprechend muß hierauf bei der Bemessung der Vorrichtung geachtet werden, und die verschiedenen Übertragungsverhältisse müssen so gewählt werden, daß der für den sicheren Betrieb der Vorrichtung erforderliche gesamte Hub des Abblasrohres 18 sich innerhalb des im wesentlichen linearen Abschnitts befindet.

Zurückkehrend zu dem Betrieb wird, solange also die Erregung des Elektromagneten 24 erhöht wird und die auf den Eisenkern einwirkende Kraft die Federkraft der Feder 23 und ggf. die Federkraft der Feder 14 überwinden kann, das Verschlußelement 15 über das Abblasrohr 18 von dem Ventilsitz 13 ferngehalten, und so ist die Druckluftspeisung des Arbeitsraums 2 durch das offene Füllventil stets sichergestellt.

Zum Schließen der Kupplung 27 muß das Kupplungpedal 25 in seine Grundstellung zurückgelassen werden. Die Erregung des Elektromagneten 24 wird von der elektrischen Regelungseinheit 53 proportional zu der Bewegung des Kupplungpedals 25 allmächlich erniedrigt. Das Abblasrohr 18 wird von der Feder 23 in Richtung zu seiner Grundtstellung verschoben. Nun setzt sich zuerst das Verschlußelement 15 auf den Ventilsitz 13 auf, wodurch das Füllventil die Verbindung zwischen dem Arbeitsraum 2 und der Druckluftquelle 39 unterbricht. Bei der fortschreitenden Rückbewegung des Abblasrohres 18 entfernt sich der an dessen Ende vorhandene Ventilsitz 20 von dem Verschlußelement 21, und der Arbeitsraum 2 wird durch das so geöffnete Entlüftungsventil mit der Umgebung in Verbindung gesetzt und entlüftet.

Falls das Entlüften schneller als die Bewegung des Abblasrohres 18 ist oder das Abblasrohr 18 stehenbleibt, z.B. weil der Fahrer die Kupplung 27 schleifen lassen möchte, wird der mit dem Hebel 28 bewegte Steuerzylinder 8 von dem sich rückwärtsbewegenden Kolben 3 auf das Abblasrohr 18 gedrückt. Hierdurch wird das Verschlußelement 21 erneut auf den an dem Ende des Abblasrohres 18 befindlichen Ventilsitz 20 gesetzt, das Entlüftungsventil wird geschlossen, und das Entlüften wird unterbrochen. Das Entlüften kann nur dann fortgesetzt werden, wenn das Abblasrohres 18 seine Rückbewegung erneut fortsetzt und den Ventilsitz 20 von dem Verschlußelement 21 entfernt.

Das Schließen der Kupplung 27 wird beendet, wenn das Abblasrohr 18 in seine Grundstellung gelangt.

Aus dieser Darlegung des Betriebes ist ersichtlich, daß die Stellung des Kupplungpedals 25 die Position des Abblasrohres 18 immer eindeutig bestimmt, die Bewegung des Kolbens 3 dieser jeweiligen Position genau folgt, und so zwischen dem Kupplungpedal 25 und dem Ausrückhebel 26 eine solche Folgeverbindung vorhanden ist, die bisher nur auf mechanischem oder hydraulischen Weg zu verwirklichen war. Die erfindungsgemäße Vorrichtung kann also alles, was die früheren Ausführungsformen konnten, aber so, daß die für die Betätigung erforderliche menschliche Kraft minimal ist, jedoch der Abstand zwischen den Steuer- und Eingriffseinheiten unbegrenzt vergrößert werden kann.

Hier soll noch erwähnt werden, daß die erfindungsgemäße Vorrichtung wegen ihrer beschriebenen Vorteile nicht nur mit einer mit menschlicher Kraft bewegten elektrischen Regeleinheit betätigt werden kann. Es wurde schon auf diejenige Entwicklungstendenz der Kraftfahrzeugindustrie hingewiesen, die die Automatisierung der trockenen Reibkupplung und des mechanischen Synchrongetriebes zu lösen versucht. Bei derartigen Ausführungsformen werden das Lösen und das Schließen der Kupplung ebenfalls von der Steuerautomatik gesteuert. Bei der erfindungsgemäßen Vorrichtung kann mithilfe einer ein gutes Programm aufweisenden Steuerautomatik, durch die elektrische Regelungseinheit, eine solche Kupplungbetätigung verwirklicht werden, die bisher nur von dem Fahrer mit herkömmlichen Betätigungsvorrichtungen verwirklicht werden konnte.

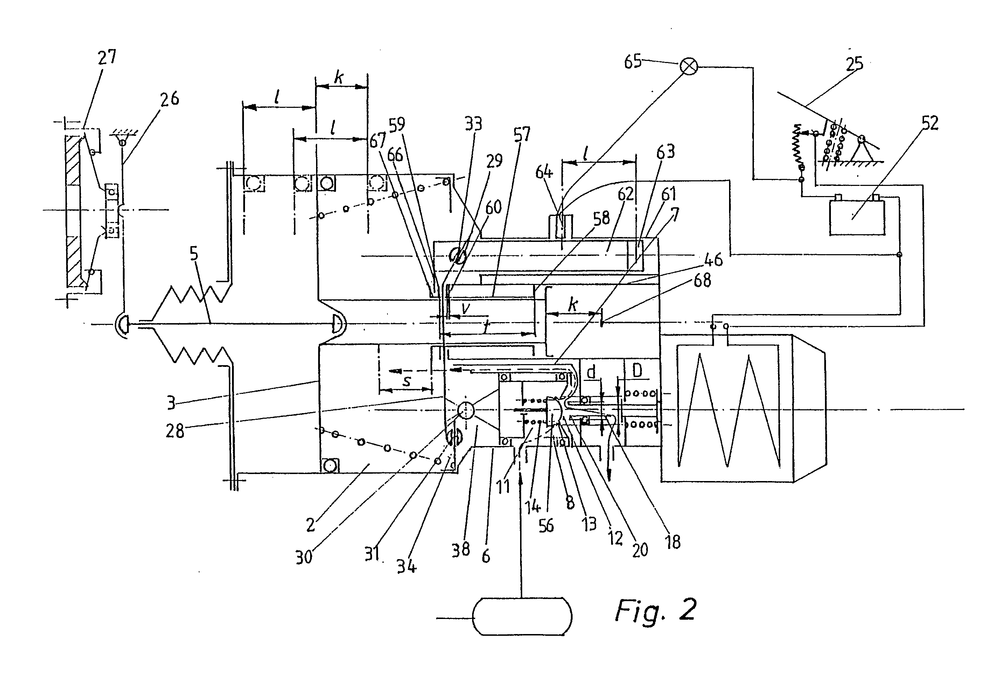

Die aus Figur 2 ersichtliche Vorrichtung weicht in einigen Teillösungen von der vorher beschriebenen Vorrichtung ab. Ein Teil dieser Teillösungen zeigt sich nur hinsichtlich der Konstruktion anders, der andere Teil verbessert den Betrieb der Vorrichtung und versieht diese mit weiteren vorteilhaften Eigenschaften.

Es ist nur als ein Unterschied in der Konstruktion zu betrachten, daß für das Abschließen des in dem Steuerkolben 8 ausgebildeten Ventilsitzes 13 und des an dem Abblasrohr vorhandenen Ventilsitzes 20 ein einziger Verschlußkörper 56 dient. Der Verschlußkörper 56 befindet sich in der Kammer 11 des Steuerkolbens 8 und wird von der Feder 14 auf den Ventilsitz 13 gedrückt.

Der Durchmesser D der Bohrung 12, die von dem Ventilsitz 13 umgeben ist, ist größer als der bei dem Ventilsitz 20 gemessene Durchmesser d des Abblasrohres 18. Dementsprechend kann das Abblasrohr 18 durch die Bohrung 12 hindurch bis zu dem Verschlußkörper 56 hinreichen.

Der auf dem Ventilsitz 13 aufsitzende, einen größeren Durchmesser aufweisende Teil des Verschlußkörpers 56 bildet das Verschlußelement des Füllventils, während die am Ende des Verschlußkörpers 56 befindliche Stirnfläche das Verschlußelement des Entlüftungsventils bildet.

Die andere Änderung in der Konstruktion betrifft die Verbindung zwischen dem Ausgleichsraum 38 und dem Arbeitsraum 2. Da der pneumatische Arbeitszylinder 1 und der Steuerzylinder 6 als ein Gußstück ausgebildet werden können, kann die Wand zwischen dem Ausgleichsraum 38 und dem Arebeitsraum 2 weggelassen werden. Dementsprechend bilden der Ausgleichsraum 38 und der Arbeitsraum 2 einen gemeinsamen Raum.

Die anderen Änderungen bringen schon Vorteile für den Betrieb mit sich.

Auf die Kolbenstange 48 des Kolbens 3 ist eine Hülse 57 aufgeschoben. Die Hülse 57 ist mit Reibschluß an der Kolbenstange 48 befestigt. Dieser Reibschluß kann auf mehrfache Weise zustandegebracht werden. Am vorteilhaftesten ist es, das eine Ende der Hülse 57 aufzuschlitzen und somit als federnde Spannbacke (als Hülsenzange) auszubilden.

An den beiden Enden der Hülse 57 sind jeweils ein Anschlag 58 und 59 vorhanden. Zwischen den beiden Anschlägen 58 und 59, auf der Strecke zwischen den beiden, erstreckt sich aus dem Führungszylinder 49 ein Anschlag 60.

Parallel zu dem Führungszylinder 49 ist eine geschlossene Leitung 61 an den Rückteil 50 des pneumatischen Arbeitszylinders 1 angeschlossen. In der geschlossenen Leitung 61 ist ein Gleiter 62 angeordnet, an dessen dem Arbeitsraum 2 benachbarten Ende eine Zunge 66, an dem anderen Ende ein Signalgeberelement 63 angeordnet sind.

Das Signalgeberelement 63 ist ein Permanentmagnet, und ein Teil eines elektrischen Signalgebers. Der andere Teil des elektrischen Signalgebers ist das Signalgeberelement 64, das ein induktiver Schalter ist, der an die Spannungsquelle 52 angeschlossen ist, wobei in dem einen Zweig der Anschlußleitung zwischen dem Schalter und der Spannungsquelle 52 ein Anzeigeelement 65, z.B. eine Lampe, eingefügt ist.

Die Zunge 22 erstreckt sich in eine Rille 67, die in dem dem Kolben 3 benachbarten Ende der Hülse 57 außerhalb des Anschlags 59 ausgebildet ist. Mit dieser Lösung bewegen sich auch die Hülse 57 und der Gleiter 62 zusammen mit dem Kolben 3.

Der an den Kolben 3 befestigte Drehpunkt 29 des Hebels 28 wurde an dem Gleiter 62 ausgebildet. Die Änderung der Hebelarmlänge wird weiterhin von der in dem Drehpunkt 29 befindlichen Kulisse 33 sichergestellt. Bei dieser Lösung kann der Hebel 28 in dem Drehpunkt 29, in der Kulisse 33, wie bei dem anderen Ende des Hebels 28 in dem an dem pneumatischen Arbeitszylinder 1 befestigten Drehpunkt 31, in der Kulisse 34 verstellt werden.

Da der Kolben 3 und der Gleiter 62 über die vorher beschriebene Kette miteinander verbunden sind, ist der an dem Gleiter 62 ausgebildete Drehpunkt 29 als ein an den Kolben 3 angeschlossener Drehpunkt zu betrachten.

Die vorstehend beschriebenen beiden Teillösungen zeigen die vorteilhafte Wirkung in der folgenden Weise.

Da es wegen der Trägheit oder wegen Fehlern der Vorrichtung vorkommen kann, daß die Bewegung des Kupplungpedals 24 und die des Kolbens 3 nicht ganz synchron sind, ist es zweckmäßig, den Fahrer wenigstens über das vollständige Lösen der Kupplung 27, auch unabhängig von dem Kupplungpedal 25 zu informieren. Bei der automatischen Steuerung ist aber diese Information unentbehrlich. Der elektrische Signalgeber dient diesem Zweck.

Das an dem Gleiter 62 befindliche Signalgeberelement 63 des elektrischen Signalgebers gelangt vor das fest angeordnete Signalgeberelement 64, wenn der Kolben 3 die für das Lösen der Kupplung 27 nötige Hublänge I zurückgelegt hat. Zu diesem Zeitpunkt betätigt der elektrische Signalgeber das Anzeigeelement 65.

Es wurde schon darauf hingewiesen, daß wegen der Abnutzung der Reibelemente der Kupplung 27 für das Nachjustieren der Vorrichtung gesorgt werden muß; sonst kann das übertragbare Drehmoment bis auf Null sinken. Diese Aufgabe wird von der Hülse 57 erfüllt.

Der Abstand t zwischen den an den beiden Enden der Hülse 57 vorhandenen Anschläge 58 und 59 ist so gewählt, daß der Abstand t gleich der Summe der Hublänge I des Kolbens 3 und der Dicke v des in dem Steuerzylinder 49 ausgebildeten Anschlages 60 ist (t = I + v). Dementsprechend legt die Hülse 57 während des Betriebes immer einen solchen Weg zurück, der der für das vollständige Lösen der Kupplung 27 erforderlichen Hublänge I entspricht.

Wenn sich die Reibelemente der Kupplung 27 abnutzen, ändert sich zwar der für das vollständige Lösen erforderliche Hub I nicht, jedoch würden sich dessen Beginn und Ende dem Rückteil 50 des pneumatischen Arbeitszylinders 1 ständig nähern. Für jede Kupplung ist ein zulässiger Abnuzungswert charakteristisch. Aus diesem und aus der eingebauten ständigen Übersetzung zwischen der Kupplung 27 und dem Ausrückhebel 26 kann diejenige Hublängendifferenz k ausgerechnet werden, um die die Punkte des Hubes I während der Abnutzung wandern.

Die Lage der Kolbenstange 48 muß also bezüglich der Hülse 57 geändert werden. Dies ist möglich, falls die Reibverbindung die Verbindung zwischen der Hülse 57 und der Kolbenstange 48 nur bis zu einer begrenzten axialen Kraft ohne Schlupf sicherstellen kann. Diese Reibkraft kann unter Berücksichtigung der folgenden Gesichtspunkte gewählt werden.

Auf die Hülse 57 wirkt ständig diejenige Kraft ein, die von dem Steuerkolben 8 über den Hebel 28 übertragen wird. Die Reibkraft muß größer als diese Kraft sein, damit diese Kraft die Hülse 57 an der Kolbenstange 48 keinesfalls verschieben kann.

Die andere an der Hülse 57 angreifende Kraft ist diejenige, die einwirkt, wenn die Kupplung 27 sich schließt. Diese Kraft kann höchstens so groß sein wie die Kraft, die aus der Schließkraft der Schließfeder der Kupplung 27 mit der vorher erwähnten inneren Übersetzung berechnet werden kann. Diese Kraft muß die auf die Hülse 57 einwirkende Reibkraft überwinden, damit die Kupplung 27 trotz der Abnutzung völlig geschlossen werden kann. In der Realität darf die Reibkraft sich dieser Kraft nicht einmal annähern. Es ist genügend, wenn die Reibkraft entsprechend der für die Bewegung des Steuerkolbens 8 erforderlichen Kraft multipliziert mit 1,2 - 1,5 gewählt wird.

Das Nachjustieren wegen der Abnutzung erfolgt also automatisch derart, daß im Falle einer Abnutzung die Kolbenstange 48 im Vergleich zu der Hülse 57 sich um das Ausmaß der Abnutzung verschiebt. So bleibt die Hublänge l konstant.

Die Anschläge 58, 59, 60 können an der Hülse 57 und an dem pneumatischen Arbeitszylinder 1 auch an anderen Stellen, auf eine andere Art angeordnet werden. Hier soll nur darauf hingewiesen werden, daß die Vorrichtung auch dann betriebsfähig ist, wenn an der Hülse 57 ein Anschlag vorhanden ist und die beide anderen entlang der Bewegungsbahn der Hülse 57 beidseitig dieses Anschlags angeordneten Anschläge an dem pneumatischen Arbeitszylinder 1 oder an einem mit diesem verbundenen Teil, wie z.B. dem Steuerkolben 49, vorhanden sind.

Obwohl der Durchmesser der aus Figur 2 ersichtlichen Kolbenstange 48 über deren gesamte Länge hin konstant ist, muß sicherheitshalber betont werden, daß die Verschiebungsmöglichkeit der Hülse 57 durch eine adäquate konstruktive Ausbildung sichergestellt werden muß. In dessen Interesse muß an der Kolbenstange 48 in Richtung zu dem Kolben 3 eine solche freie Strecke s freigehalten werden, die wenigstens so lang ist wie die Hublängendifferenz k.

Es stellt eine weitere Verfeinerungsmöglichkeit dar, die Bewegung des Kolbens 3 am Ende der Hublängendifferenz k zu begrenzen. Für diesen Zweck dient die in dem Ende des Steuerkolbens 49 ausgebildete Anschlagfläche 60. Mit dieser kann verhindert werden, daß die Abnutzung eine bleibende Schädigung verursacht. Die Bewegungsbegrenzung des Kolbens 3 kann auch anders gelöst werden, z.B. dadurch, daß er einfach an den Rückteil 50 anstößt.

Obwohl beide Ausführungsformen illustrieren, wie die erfindungsgemäße Vorrichtung an die Kupplung von Kraftfahrzeugen adaptiert werden kann, ist es offensichtlich, daß die Erfindung bei allen solchen Fernbetätigungen verwendet werden kann, wo eine Fühlersteuerung erforderlich ist. Die Gegebenheiten der betätigten Konstruktionen sind unterschiedlich, dementsprechend sind unterschiedliche Ausführungsformen notwendig.

Bei der Betätigung von Kupplungen kommen große Verstellungen vor, die für die proportionalen Elektromagnete zu lang wären, dementsprechend ist eine Übersetzung zwischen dem Kolben und den Steuerkolben erforderlich. Es kann leicht eingesehen werden, daß im Falle von kleineren Verstellwegen die Übersetzung weggelassen werden kann und der Steuerkolben mit dem Kolben unmittelbar verbunden werden kann.

Falls erforderlich, kann die integrierte Ausführungsform des pneumatischen Arbeitszylinders und des Steuerkolbens weggelassen werden bzw. können diese beiden in einem Gußstück auch anders relativ zueinander angeordnet werden.

Bei einem bedeutenden Teil der betätigten Konstruktionen, auch in der Fahrzeugindustrie, wird der Kolben als Membran ausgebildet. Dies wirkt sich auf die Verwendbarkeit der Erfindung nicht aus.

Die anhand der Figur 2 dargestellte Abnutzungsnachjustierervorrichtung stellt ein mechanisches Nachjustieren sicher. Verschiedene mechanische Abnutzungsnachjustierervorrichtungen gab es auch schon auch früher; prinzipiell können einige von denen an die erfindungsgemäße Vorrichtung angepaßt werden. Bei der Anpassung muß darauf Rücksicht genommen werden, daß die Verstellung zwischen dem Kolben und dem Steuerkolben erfolgt; dementsprechend ist das eine Verbindungselement der Abnutzungsnachjustierervorrichtung immer an dem Kolben, das andere Verbindungselement derselben immer an dem Steuerkolben in irgendeiner Weise anzuschließen.

Liste der Bezugszeichnen

| | |
|---|---|
| 1 | pneumatischer Arbeitszylinder |
| 2 | betätigender Zylinderraum |
| 3 | Kolben |
| 4 | Dichtungsring |
| 5 | Schubstange |
| 6 | Steuerzylinder |
| 7 | Luftleitung |
| 8 | Steuerkolben |
| 9 | Dichtungsring |
| 10 | Dichtungsring |
| 11 | Kammer |
| 12 | Bohrung |
| 13 | Ventilsitz |
| 14 | Feder |
| 15 | Verschlußelement (Füllventil) |
| 16 | Endwand |
| 17 | Bohrung |

| | |
|---|---|
| 18 | Abblasrohr |
| 19 | Dichtungsring |
| 20 | Ventilsitz |
| 21 | Verschlußelement (Entlüftungsventil) |
| 22 | Schaft |
| 23 | Feder |
| 24 | Elektromagnet |
| 25 | Kupplungpedal |
| 26 | Ausrückhebel |
| 27 | Kupplung |
| 28 | Hebel |
| 29 | Drehpunkt |
| 30 | Drehpunkt |
| 31 | Drehpunkt |
| 32 | Kolbenstange |
| 33 | Kulisse |
| 34 | Kulisse |
| 35 | Feder |
| 36 | Deckel |
| 38 | Ausgleichsraum |
| 39 | Druckluftquelle |
| 40 | Einlaßöffnung |
| 41 | Abblasöffnung |
| 42 | Öffnung |
| 43 | Bohrung |
| 44 | Rohr |
| 45 | Steuerraum |
| 46 | Einlaßöffnung |
| 47 | Einlaßöffnung |
| 48 | Kolbenstange |
| 49 | Steuerraum |
| 50 | Rückteil |
| 51 | Innenraum |
| 52 | Spannungsquelle |
| 53 | elektrische Regelungseinheit |
| 54 | Feder |
| 55 | Federteller |
| 56 | Verschlußkörper |
| 57 | Hülse |
| 58 | Anschlag |
| 59 | Anschlag |
| 60 | Anschlag |
| 61 | geschlossene Leitung |
| 62 | Gleiter |
| 63 | Signalgeberelement |
| 64 | Signalgeberelement |
| 65 | Anzeigerelement |
| 66 | Zunge |
| 67 | Rille |
| 68 | Anschlagfläche |
| $l$ | Hublänge |
| $\bar{k}$ | Hublängendifferenz |
| $\bar{t}$ | Abstand |
| $\bar{v}$ | Dicke |
| $\bar{s}$ | freie Länge |
| $\bar{d}$ | Durchmesser |
| $\bar{D}$ | Durchmesser |

**Patentansprüche**

1. Pneumatische Betätigungsvorrichtung zur Betätigung einer zur Drehmomentübertragung eines Verbrennungsmotors dienenden Reibkupplung, wobei die Vorrichtung einen pneumatischen Arbeitszylinder (1), in diesem einen Arbeitsraum (2) und einen in dem Arbeitsraum (2) sich dicht bewegenden Kolben (3) aufweist, der Kolben (3) ggf. als Membran ausgebildet ist und an dem Kolben (3) an der dem Arbeitsraum (2) abgewandten Seite eine Schubstange (5) abgestützt ist, weiterhin der Arbeitsraum (2) über ein Entlüftungsventil mit der Umgebung, und über ein Füllventil mit einer Druckluftquelle (39) verbunden ist, dadurch gekennzeichnet, daß an dem pneumatischen Arbeitszylinder (1) ein Steuerzylinder (6) angeordnet ist, in dem Steuerzylinder (6) ein an seinen beiden Enden abgedichteter Steuerkolben (8) vorhanden ist, der Steuerkolben (8) den Raum des Steuerzylinders (6) in einen Steuerraum (45) und einen Ausgleichsraum (38) unterteilt, der Steuerraum (45) und der Ausgleichsraum (38) mit dem Arbeitsraum (2) in Verbindung stehen, in dem Steuerkolben (8) eine Kammer (11) ausgebildet ist, die einerseits über eine durch die Stirnwand des Steuerkolbens (8) hindurchführende Bohrung (12) mit dem Steuerraum (45), andererseits über eine durch die Seitenwand des Steuerkolbens (8) hindurchführende Öffnung (42) mit einer die Druckluft einführenden Einlaßöffnung (40) des Steuerkolbens (6) verbunden ist, rings der durch die Stirnwand des Steuerkolbens (8) hindurchführenden Bohrung (12) von der Kammer (11) her ein Ventilsitz (13) ausgebildet ist, der Ventilsitz (13) von einem mit einer Füllventilfeder (14) belasteten Verschlußelement (15) abgeschlossen wird, der Steuerkolben (8) mit dem Kolben (3) des pneumatischen Arbeitszylinders (1) in Betätigungsverbindung steht, in der dem Steuerkolben (8) gegenüberliegenden Endwand (16) des Steuerraumes (45) eine Bohrung (17), und in dieser ein sich abgedichtet bewegendes Abblasrohr (18) angeordnet sind, an dem sich in den Steuerraum (45) erstreckenden Ende des Abblasrohres (18) ein Ventilsitz (20) ausgebildet ist, vor dem das Verschlußelement (21) des Entlüftungsventils angeordnet ist, das Verschlußelement (21) des Entlüftungsventils und das Verschlußelement (15) des Füllventils miteinander in Betätigungsverbindung stehen, der Innenraum (51) des Abblasrohres (18) mit der Umgebung verbunden ist, das Abblasrohr (18) in einer zu dem Verschlußelement (21) des Entlüftungsventils entgegengesetzten Richtung von einer Feder (23) belastet ist und mit einem Elektromagneten (24) in Betätigungsverbindung steht, schließlich der Elektromagnet (24) mit einer durch menschliche Kraft und/oder automatisch gesteuerten elektrischen Regelungsbaueinheit (53) verbunden ist.

2. Vorrichtung nach Anspruch 1, dadurch gekennzeichnet, daß das Verschlußelement des Füllventils und das Verschlußelement des Entlüftungsventils als ein einziger Verschlußkörper (56) ausgebildet sind, und der in dem Steuerkolben (8) ausgebildete Ventilsitz (13) und der an dem Abblasrohr (18) ausgebildete Ventilsitz (20) koaxiale Rotationsflächen bilden, und der Außendurchmesser (d) des Abblasrohres (18) im Bereich des Ventilsitzes (20) kleiner ist als der Durchmesser (D) der in dem Steuerkolben (8) angeordneten Bohrung (12).

3. Vorrichtung nach Anspruch 1 oder 2, dadurch gekennzeichnet, daß der pneumatische Arbeitszylinder (1) und der Steuerzylinder (6) als eine einzige Baueinheit ausgebildet sind und der betätigende Arbeitsraum (2) und der Ausgleichsraum (38) einen gemeinsamen Raum bilden.

4. Vorrichtung nach einem der Ansprüche 1 bis 3, dadurch gekennzeichnet, daß der Kolben (3) des pneumatischen Arbeitszylinders (1) oder ein mit dem Kolben (3) in Zwangsverbindung stehendes Bauteil und der Steuerkolben (8) mit jeweils einem Drehpunkt (29, 30) eines Hebels (28) verbunden sind, während der dritte Drehpunkt (31) des Hebels (28) an dem pneumatischen Arbeitszylinder (1) befestigt ist.

5. Vorrichtung nach einem der Ansprüche 1 bis 4, dadurch gekennzeichnet, daß zwei Drehpunkte (29, 31) von den Drehpunkten (29, 30, 31) des Hebels (28) mit jeweils einer Kulisse (33, 34) verbunden sind.

6. Vorrichtung nach einem der Ansprüche 1 bis 5, dadurch gekennzeichnet, daß der Kolben (3) des pneumatischen Arbeitszylinders (1) von dem Arbeitsraum (2) her mit einer Kolbenstange (48) versehen ist, wobei die Kolbenstange (48) mit dem einen, und der Steuerkolben (8) mit dem anderen Anschlußelement einer an sich bekannten Verschleißnachjustiereinheit in Betätigungsverbindung stehen.

7. Vorrichtung nach einem der Ansprüche 1 bis 6, dadurch gekennzeichnet, daß an der Kolbenstange (48) des in dem pneumatischen Arbeitszylinder (1) angeordneten Kolbens (3) eine sich reibschlüssig anschließende Hülse (57) vorhanden ist, die Hülse (57) mit dem Steuerkolben (8) in Betätigungsverbindung steht, an dem einen der von der Hülse (57) und dem die Hülse (57) umschließenden Teil des pneumatischen Arbeitszylinders (1) gebildeten Bauteilen ein Anschlag (60), und an dem anderen dieser Bauteile entlang der Bewegungsbahn der Hülse (57) beidseitig des Anschlags (60) jeweils ein weiterer äußerer Anschlag (58, 59) angeordnet ist, der Abstand (t) zwischen den beiden äußeren Anschlägen (58, 59) gleich der Summe der jeweils zugelassenen Hublänge (l) des Kolbens (3) und der Dicke (v) des mittleren Anschlages (60) ist, die Reibkraft des Reibschlusses zwischen der Kolbenstange (48) und der Hülse (57) größer ist als die aufgrund der den Steuerkolben (8) mit der Hülse (57) verbindenden Betätigungsverbindung auf die Hülse (57) einwirkende axiale Kraft, aber kleiner ist als die von der in der Grundstellung befindlichen betätigten Baueinheit, ggf. von einer im geschlossenen Zustand befindlichen Kupplung (27) in dem Kolben (3) erzeugte axiale Kraft, und der freie Axialabstand (s) zwischen der Hülse (57) und dem Kolben (3) wenigstens so groß ist wie die aus der zulässigen Abnutzung der Elemente der betätigten Baueinheit unter Berücksichtigung des zwischen der betätigten Baueinheit und dem Kolben (3) vorhandenen Übersetzungsverhältnisses berechnete Hubdifferenz (k).

8. Vorrichtung nach einem der Ansprüche 1 bis 7, dadurch gekennzeichnet, daß der an den Kolben (3) angeschlossene Drehpunkt (29) des Hebels (28) mit der Hülse (57) verbunden ist.

9. Vorrichtung nach einem der Ansprüche 1 bis 8, dadurch gekennzeichnet, daß der Kolben (3) des pneumatischen Arbeitszylinders (1) mit einem Signalgeberelement (63) eines elektrischen Signalgebers in Zwangsverbindung steht, das andere Signalgeberelement (64) an den pneumatischen Arbeitszylinder (1) angeschlossen ist, und der elektrische Signalgeber mit einer Anzeigeeinheit (65) und/oder mit einer automatisch gesteuerten elektrischen Regelungsbaueinheit verbunden ist.

10. Vorrichtung nach einem der Ansprüche 1 bis 9, dadurch gekennzeichnet, daß hinter dem Kolben (3) des pneumatischen Arbeitszylinders (1) oder hinter dem mit diesem Kolben (3) verbundenen Bauelement, ggf. der Kolbenstange (48), in einem von der Grundstellung gemessenen Abstand eine Anschlagfläche (68) ausgebildet ist, wobei der Abstand der Hubdifferenz (k) entspricht, die aus der zulässigen Abnutzung der Elemente der betätigten Baueinheit unter Berücksichtigung des zwischen der betätigten Baueinheit und dem Kolben (3) vorhandenen Übersetzungsverhältnisses berechnet ist.

Fig. 1

Fig. 2

EP 0 458 266 A1

**Europäisches Patentamt**

## EUROPÄISCHER RECHERCHENBERICHT

Nummer der Anmeldung

**EP 91 10 8189**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 166 823 (VOLVO) <br> * das ganze Dokument * <br> — — — | 1,3 | F 16 D 25/14 <br> F 16 D 25/11 <br> F 16 D 25/08 |
| Y | GB-A-9 224 19 (MAGNETI MARELLI) <br> * das ganze Dokument * <br> — — — — — | 1,3 | |

**RECHERCHIERTE SACHGEBIETE (Int. Cl.5)**

F 16 D

Der vorliegende Recherchenbericht wurde für alle Patentansprüche erstellt

| Recherchenort | Abschlußdatum der Recherche | Prüfer |
|---|---|---|
| Den Haag | 13 August 91 | BALDWIN D.R. |